# EUROPEAN PATENT APPLICATION

(11) **EP 0 546 729 A1**
(43) Date of publication of application: **16.06.1993**
(21) Application number: 92310849.2
(22) Date of filing: 27.11.1992
(51) Int. Cl.: B60T 8/48, B60T 8/50

(54) **Improvements in hydraulic systems for vehicles**

(30) Priority: 11.12.1991 GB 9126319; 30.03.1992 GB 9206878
(71) Applicant: LUCAS INDUSTRIES PUBLIC LIMITED COMPANY, Solihull, West Midlands B91 3TX (GB)
(72) Inventor: Bayliss, John Patrick, Redditch, Worcestershire B87 4NF (GB); Byrnes, Sean, Kings Heath, Birmingham B14 7ND (GB)
(74) Representative: Spall, Christopher John

(57) **Abstract**

In an hydraulic system including an hydraulic master cylinder assembly (1) for normal service braking, a pump (12) is adapted to return the volume of fluid applied to a brake (2) for brake re-application in an anti-lock mode at a rate determined by a solenoid-controlled flow control valve (7) and to provide the necessary pressure to operate a brake on a spinning wheel for traction control. The master cylinder assembly (1) is also connected to the brake (2) through a by-pass circuit (20) by-passing the flow control valve (7) and including a second solenoid-controlled valve (40) responsive to signals from an electronic control module (30) to place the master cylinder assembly (1) in direct communication with the brake (2) upon latching of the flow control valve (7).

## Description

This invention relates to hydraulic systems for vehicles of the type having a front pair of wheels and a rear pair of wheels, of which first and second wheels of at least one pair are driven, and each wheel is provided with an hydraulically actuated brake, the system being of the kind comprising an hydraulic master cylinder assembly for applying all the brakes, a speed sensor for sensing the speed of rotation of each wheel, modulator means for modulating the supply of fluid from the master cylinder assembly to the brakes, and an electronic control module which receives signals from the speed sensors and is operative to actuate the modulator means in turn to control operation of a respective wheel depending upon the nature and duration of the said signal, such as a signal indicative of an incipient lock of a braked wheel to achieve brake release or a signal indicative of drive slip (spin) of a driven wheel to apply a brake for traction control.

In known hydraulic systems of the kind set forth, such as disclosed in EP-A-0 267 018 a booster or servo controls operation of the master cylinder assembly and is adapted to be operated independently of a pedal to control operation of the master cylinder to apply a brake on a spinning wheel, and a motor driven pump is adapted to make up the volume of fluid dumped from a brake during an anti-lock mode so that the brake can be re-applied at a rate determined by the modulator means.

In such known systems provided with a solenoid-controlled flow control valve responsive to signals from the electronic control module, a pump is adapted to make up of the volume of fluid applied to a brake for brake re-application in an anti-lock mode. Conveniently the pump can also be arranged to provide the necessary pressure to operate a brake on a spinning wheel for traction control.

Problems may arise should the modulator means latch in a position of zero or minimum flow, for example after a traction control mode. This, therefore, can prevent the brake from being re-applied rapidly from the master cylinder through the modulator means for normal service braking.

We are also aware of US-A-4 878 715 which also discloses a hydraulic system of the kind set forth. In the construction disclosed in US-A-4 878 715 the modulator means comprises first and second solenoid-controlled valves responsive to signals from the electronic control module to control communication between the master cylinder and the brake for anti-lock control, and between the pump and the brake for traction control. Should at least the first solenoid-controlled valve latch or jam in a closed position the particular circuit layout prevents the brakes from being applied, or if applied, from being released.

According to our invention in an hydraulic system of the kind set forth for a vehicle provided with a first solenoid-controlled valve responsive to signals from the electronic control module, and a pump adapted to return a dumped volume of fluid to apply the brake for brake re-application in an anti-lock mode, and to provide the necessary pressure to operate a brake on a spinning wheel for traction control, the hydraulic master cylinder assembly is also connected to the brake through a by-pass circuit by-passing the modulator means.

Preferably the modulator means comprises a solenoid controlled flow valve responsive to signals from the electronic control module.

In such a construction, should the flow control valve latch in a fully closed position or a position of minimum flow, for example during a traction control mode, a second solenoid-controlled valve opens the by-pass circuit so that the brake can be applied directly from the master cylinder assembly for brake operation.

When the master cylinder assembly is operated a pressure-sensitive isolator valve may be urged into a closed position to isolate a supply of fluid for traction control from the pump.

Alternatively, the isolator valve may be omitted, and a one-way valve may be located between the second solenoid-controlled valve and a by-pass pipe-line leading to the brake, with the one-way valve disposed on the downstream side of the pump input side.

A one-way valve may be located downstream of the second solenoid-controlled valve to prevent reverse flow of fluid when the brake is applied during traction control mode.

Alternatively the one-way valve can be omitted and the pressure-sensitive isolator valve can be adapted to incorporate a pressure-operated one-way valve to prevent reverse flow of fluid when the brake is applied during traction control mode.

When the brake is operated for traction control, the fluid may be supplied to the brake at a rate determined by the flow control valve.

Three embodiments of our invention are illustrated in the accompanying drawings in which:-
Figure 1 is a layout of an hydraulic system for a four wheel vehicle;
Figure 2 is a layout of another hydraulic system; and
Figure 3 is a layout of yet another hydraulic system.

The hydraulic system illustrated in the drawings comprises an hydraulic master cylinder assembly 1 for applying brakes on driven front wheels of a vehicle of which only a brake 2 on one front wheel 3 is illustrated. The master cylinder assembly 1 is operated by a pedal 4 with the assistance of a pneumatic booster or servo motor 5. When operated fluid is displaced to the brake 2 from a pressure space in the master cylinder 1 with the pressure space being supplied with fluid from a reservoir 6 at atmospheric pressure.

A brake pressure modulator means comprising a flow control valve 7 is located in the line between the master cylinder assembly 1 and the brake 2. The flow control valve 7 is of known construction being controlled by a first solenoid-controlled valve 8 and being provided with a restrictor 9 of fixed area and a restrictor 10 of which the area is variable in response to a pressure drop across the restrictor 9. The variable restrictor is defined by movement of a spool containing orifices relative to orifices in the wall of the bore in which it is guided to slide.

A second solenoid-controlled 3/2 position valve 11 is located in the line between the master cylinder assembly 1 and the flow control valve 7. The valve 11 is adapted to control communication between the master cylinder assembly 1 and the flow control valve 7. Communication between the master cylinder assembly 1 and the brake 2 is controlled through a by-pass circuit comprising a passage 20 provided with a one-way valve 21.

A suction pump 12 is adapted to be driven by an electric motor 13. The pump 12 is also connected to a dump line 14 from the brake 2 and an expander chamber 15 in that line. The pump 12 is adapted to pump fluid to a restrictor 22, with an attenuator chamber 16 being disposed in the delivery line 17.

A normally open pressure-responsive isolator cut-off valve 40 adapted to be closed by pressure from the master cylinder assembly 1 is located in a line 41 between the reservoir 6 and the input side of the pump 12.

A high pressure check valve 18 set substantially at 150 bar is disposed in a by-pass return line 19 back to the master cylinder assembly 1. The return line 19 by-passes the solenoid-controlled valve 11.

An electronic control module 30 is adapted to receive signals from a wheel speed sensor 31, which indicates the behaviour of the wheel 3, whether braked or unbraked, from a switch 32 responsive to operation of the pedal 4, and from a switch 33 responsive to movement of the throttle 34 of the engine of the vehicle. In response to such signals the electronic control module 30 emits electric currents to energise solenoids of the solenoid-controlled valves 8 and 11 in a manner and in a sequence to be described.

In a normal inoperative position of the system the solenoids of the valve 8 and 11 are de-energised. The valve 8 is closed and the valve 11 is open so that the master cylinder assembly 1 is in communication with the flow-control valve 7, and flow to the by-pass passage 20 is cut-off. The motor 13 is also switched off. When the engine is running, a signal is transmitted from the switch 33 to the control module 30, at least when the throttle 34 is displaced from tick-over.

When the pedal 4 is displaced to operate the master cylinder assembly 1, a signal is sent to the control module 30 from the switch 32. Fluid is also displaced from the pressure space to the brake 2 through the open solenoid-controlled valve 11, and the flow control valve 7 which is open because of closure of the solenoid valve 8. Flow through the flow control valve 7 is therefore unrestricted. Pressure from the master cylinder assembly 1 also acts to close the isolator valve 40 and hence cut off communication between the reservoir 6 and the pump 12.

When the electronic control module 30 recognises that the signal from the sensor 31 indicates the approach of a wheel lock, it energises the solenoid of the valve 8. This opens the valve 8, in turn allowing the flow control valve 7 to close and isolate the brake 2 from the master cylinder assembly 1, with fluid to the brake 2 being dumped to the expander chamber 15 through the dump line 14. The control module 30 starts the motor 13 to drive the pump 12, and the pump 12 withdraws fluid from the chamber 15 and pumps it back into the master cylinder circuit in a known manner, through the attenuation chamber 16 and the fixed restrictor 22.

When the wheel has recovered, the control module 30 permits the valve 8 to close, and the brake 2 is re-applied at a controlled rate determined by the flow-control valve 7 and the area of the variable orifice.

When the electronic control module 30 detects that the wheel 3 is spinning it starts the motor 13, and energises the solenoid of the valve 11 to close that valve and isolate the master cylinder assembly 1 from the flow control valve 7. Since no closing pressure is applied to the isolator valve 40 it remains open so that the reservoir 6 is in communication with the low pressure side of the pump 12. The suction pump 12 withdraws fluid from the reservoir 6 only, since no fluid is present in the expander chamber 15. This fluid is pumped to the flow control valve 7 to apply the brake 2 to stop the wheel spinning, at a rate determined by flow through the flow control valve 7 and to achieve traction control.

In order to control the spinning wheel 3 the brake 2 may need to be applied and released several times. This is achieved in the same manner as for anti-lock control. The solenoid of the valve 8 is energised to release the applied brake fluid to the expander chamber 15. The pump 12 now takes the source of dumped fluid from the expander chamber 15 and re-applies it to the brake 2 at a rate determined by the flow control valve 7. The procedure will occur as long as traction control is required for that particular wheel 3, during one complete traction control application.

If for any reason the system is stiff, for example if the flow control valve 7 is latched in a position of minimum flow, any excess pressure fluid is fed back to the low pressure side of the pump 12 through the high pressure check valve 18, passage 19, the pressure space in the master cylinder assembly 1, the reservoir 6, and the line 41.

At the end of a traction control application the solenoid controlled valves 11 and 8 are de-energised. This allows any applied brake fluid in the brake 2 to be returned to the master cylinder assembly 1 via the now open solenoid controlled valve 11. Any excess fluid in the expander chamber 15 is pumped back to the master cylinder assembly 1 using the pump 12.

This process of returning the applied fluid back to the master cylinder assembly 1 takes a short period of time, especially so if the spool of the flow control valve 7 is in the restricted position.

Thus the brakes are applied when a traction control operation as described above is in progress, the signal from the switch 32 or from the switch 33 changes as the throttle 34 is released and the foot is transferred to the pedal 4. The control module 30 holds the valve 11 energised for a short given period of time. This period of time is chosen to permit pressure from the master cylinder assembly 1 to be applied to the brake 2 through the by-pass passage 20 and the one-way valve 21 during the time it takes for the flow control valve 7 to return to a position of maximum or unrestricted flow. At the end of this period of time the valve 11 is de-energised and places the master cylinder assembly 1 in direct communication with the brake 2. This ensures that the brakes can be applied fully, and re-application will not be affected by stiction of the flow control valve 7, for example to latch in a closed position, which may occur due to extremely cold weather conditions.

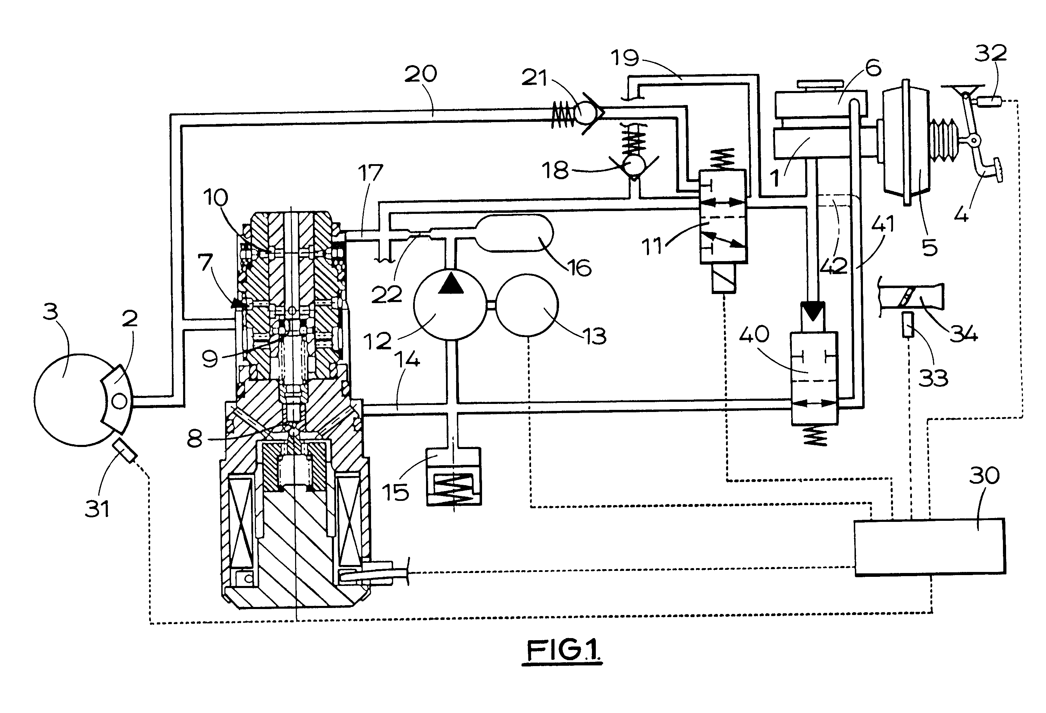

In a modification of the layout of Figure 1, the line 41 is disconnected from the reservoir 6 and is, instead, re-connected to the outlet from the master cylinder assembly 1 as shown by the line 42 illustrated in chain - dotted lines. Fluid can then be withdrawn from the reservoir 6, indirectly through the pressure space of the master cylinder assembly 1.

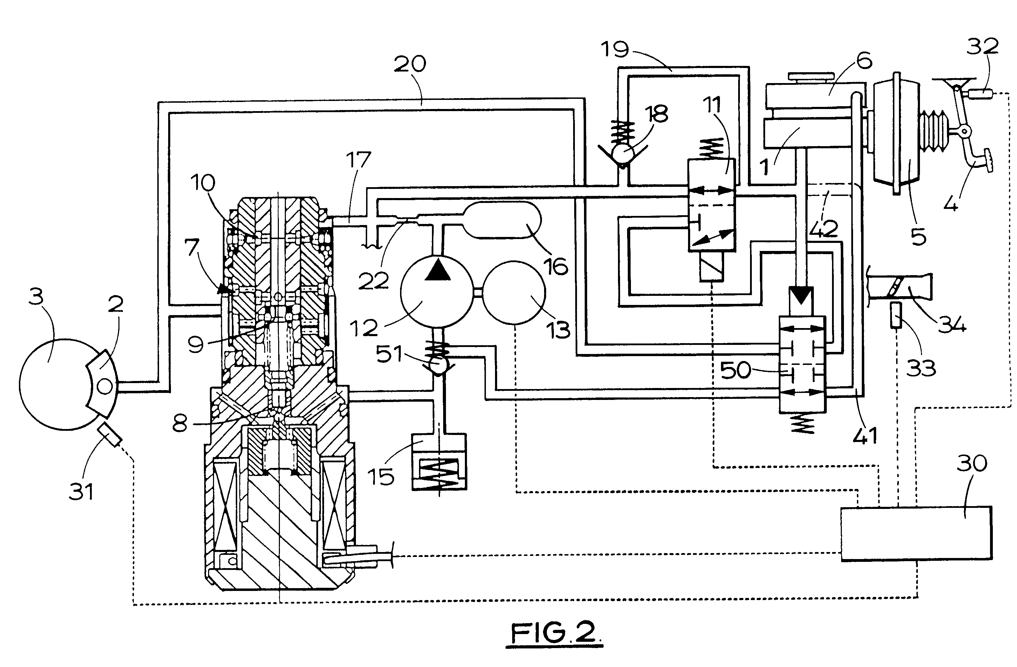

In the system illustrated in the layout of Figure 2 of the accompanying drawings, the isolator valve 40 is replaced by a double-ended pressure-responsive isolator cut-off valve 50 incorporating a second cut-off valve, and the one-way valve 21 is omitted. The by-pass passage 20 is connected through the isolator valve 50 so that flow through the passage 20 is also cut-off by pressure from the master cylinder assembly 1, simultaneously with closure of the line 41.

A check valve 51 may be provided on the low- pressure inlet side of the pump 12, upstream of the connection with the line 41. This prevents evacuation of the brake 2 during traction control.

Should the solenoid valve 11 stick in a position of low or zero flow, the brakes can be released by reverse flow from the brake to the master cylinder 1 through the by-pass passage 20 and the isolator valve 50.

The construction and operation of the system of Figure 2 is otherwise the same as that of Figure 1 and corresponding reference numerals have been applied to corresponding parts.

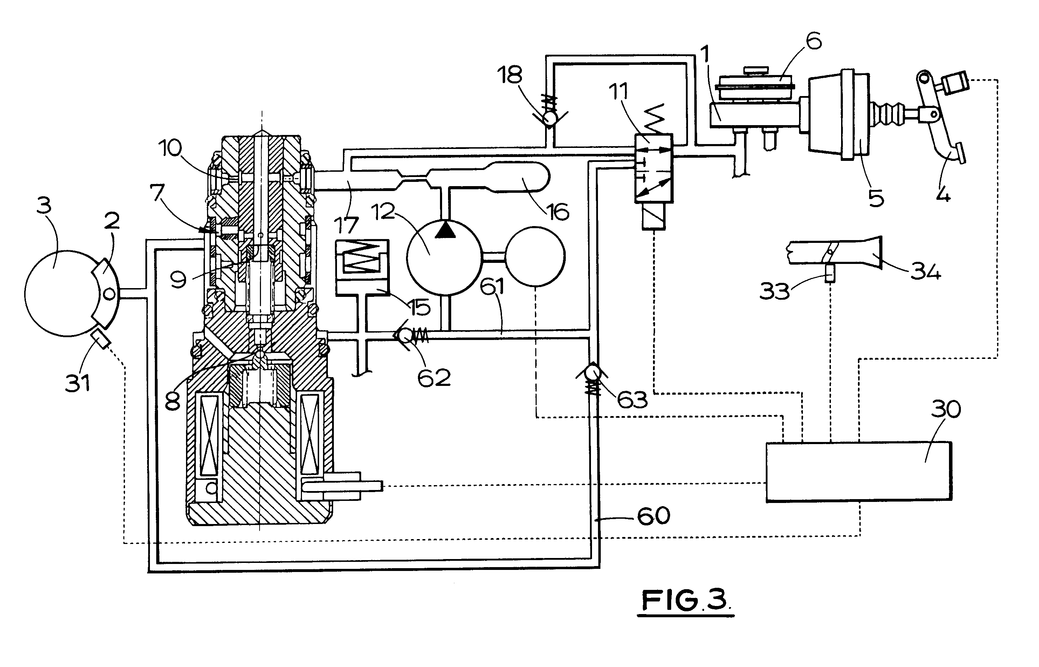

In the hydraulic system shown in the layout of Figure 3 of the accompanying drawings, the isolator valve 50, the by-pass passage 20, and the passage 41 are omitted. The second outlet from the 3/2 solenoid-controlled valve 11 is connected to the brake 2 through the by-pass passage 60. The passage 60 has a branch line 61 leading to the pump 12 and a one-way valve 62 is located in the line 61 between the pump inlet and the expander chamber 15. A one-way valve 63 is disposed in the by-pass passage 60 on the downstream side of the branch line 61.

During normal operation the solenoid-controlled valve 11 is de-energised to isolate the master cylinder 1 from the by-pass passage 60 and to permit the brake 2 to be applied through the flow control valve 7 as described above.

Similarly, during brake re-application during an anti-lock control, the pump 12 withdraws fluid from the expander chamber 15 and pumps it to the brake 2 through the flow control valve 7.

During traction control, with the valve 11 latched closed to isolate the master cylinder 1 from the flow control valve 7, the suction pump 12 withdraws fluid from the reservoir 6 through the valve 11 and the master cylinder 1. This fluid is pumped to the brake 2 through the flow control valve 7, and the one-way valve 63 prevents fluid from being withdrawn from the brake 2.

Should the system be stiff, for example should the flow controlled valve 7 be latched in a position of minimum flow, any excess pressure fluid is fed back to the low pressure side of the pump 12 through the high pressure check valve 18, the passage 19, the valve 11, and the portion of the by-pass passage 60 on the upstream side of the one-way valve 63.

If the brakes are applied when a traction control operation is in progress and the valve 11 is held energised for a short given period of time as described above, pressure from the master cylinder 1 is applied to the brake 2 through the by-pass passage 60 and the one-way valve 63.

The construction and operation of the system illustrated in Figure 3 is otherwise the same as that of Figure 2 and corresponding reference numerals have been applied to corresponding parts.

## Claims

1. An hydraulic system for a vehicle of the type having a front pair of wheels (3) and a rear pair of wheels, of which first and second wheels of at least one pair are driven, and each wheel (3) is provided with an hydraulically actuated brake (2), the system comprising an hydraulic master cylinder assembly (1) for applying all the brakes, a speed sensor (31) for sensing the speed of rotation of each wheel, modulator means (7) for modulating the supply of fluid from the master cylinder assembly to the brakes, and an electronic control module (30) which receives signals from the speed sensors and is operative to actuate the modulator means in turn to control operation of a respective wheel depending upon the nature and duration of the said signal, in which the system is provided a pump (12) adapted to return a dumped volume of fluid to apply the brake for brake re-application in an anti-lock mode, and to provide the necessary pressure to operate a brake on a spinning wheel for traction control, characterised in that the hydraulic master cylinder assembly (1) is also connected to the brake (2) through a by-pass circuit (20, 60) by passing the modulator means (7).

2. A system according to claim 1, characterised in that the modulator means comprises a solenoid controlled flow valve (7) responsive to signals from the electronic control module (30) and movable between an open position and latched position of minimum flow, and the by-pass circuit (20, 60) includes a second solenoid-controlled valve (11) also responsive to signals from the control module (30) to place the master cylinder assembly in direct communication with the brake when the flow valve (7) is in the latched position.

3. A system according to claim 2, characterised in that the flow valve (7) is controlled by a first solenoid-controlled valve (8).

4. A system according to any of claims 1-3, characterised in that a pressure-sensitive isolator valve (40, 50) is located in a line between the pump (12) and a supply (6) of fluid from which the pump (12) draws fluid for traction control, the isolator valve (40, 50) being normally open but being movable into a closed position to isolate the supply (6) from the pump (12) in response to pressurised fluid from the master cylinder assembly (1) when the master cylinder assembly (1) is operated.

5. A system according to any of claims 1-3, characterised in that a one-way value (63) is located between the second solenoid-controlled valve (11) and a by-pass pipe-line (60) leading to the brake (2), the one-way valve (63) being disposed on the downstream side of an inlet (61) to the pump (12).

6. A system according to claim 4, characterised in that a one-way valve (21) is located in the by-pass circuit (20) downstream of the second solenoid-controlled valve (11) to prevent reverse flow of fluid when the brake is applied during traction control mode.

7. A system according to claim 4, characterised in that the pressure-sensitive isolator valve (50) incorporates a pressure-operated one-way valve to prevent reverse flow of fluid when the brake is applied during traction control mode.
